# EUROPÄISCHE PATENTANMELDUNG

(11) **EP 2 434 607 A2**
(43) Veröffentlichungstag der Anmeldung: **28.03.2012**
(21) Anmeldenummer: 11010032.8
(22) Anmeldetag: 15.06.2004
(51) Int. Cl.: H02J 3/38, F03D 9/00

(54) **Windenergieanlage**

(30) Priorität: 16.06.2003 DE 10327344
(62) Teilanmeldung aus: 04739904.3
(71) Anmelder: Repower Systems AG, 22335 Hamburg (DE)
(72) Erfinder: Altemark, Jens, 24768 Rendsburg (DE); Matzen, Björn, 24395 Nieby (DE); Zeumer, Jörg, 24768 Rendsburg (DE)
(74) Vertreter: Emmel, Thomas

(57) **Zusammenfassung**

Die Erfindung betrifft eine Windenergieanlage mit einem Rotor (100) mit mindestens einem Rotorblatt (101), der direkt oder indirekt mit einem Generator (110), zur elektrischen Leistungserzeugung gekoppelt ist, und einem elektrischen System (200), bestehend aus unterschiedlichen elektrischen Systemeinheiten (210, 220, 230, 400), die elektronische, elektrische und/ oder elektromechanische, und/ oder sensorische Komponenten und/ oder elektrotechnische Schutzeinrichtungen aufweisen, und bei der alle Komponenten einer elektrischen Systemeinheit (210, 220, 230, 400) oder bestimmte Komponenten der elektrischen Systemeinheit (210, 220, 230, 400) entsprechend ihrer Aufgaben in ein oder mehrere Funktionsmodule (250, 250', 410) zusammengefasst sind, die mindestens eine Funktion in Verbindung mit der elektrischen Leistungserzeugung ausführen, wobei zu mindestens einem Funktionsmodul (250, 250', 410) mindestens ein Parallelmodul (270, 410') vorgesehen ist, das bei Normalbetrieb der Anlage eine gleiche oder ähnliche Funktion des Funktionsmodul (250, 250', 410) ausführt oder ausführen kann, und wobei Funktionsmodul (250, 250', 410) und Parallelmodul (270, 410') dergestalt miteinander verbunden oder verbindbar sind, dass bei einer Betriebsstörung, bei der ein Funktionsmodul (250, 250', 410) oder ein Parallelmodul (270, 410') ausfällt, das verbleibende funktionsfähige Funktions- oder Parallelmodul (250, 250', 270, 410, 410') zumindest teilweise die elektrische Leistungserzeugung aufrecht erhält, wobei eine Einrichtung zur Kopplung des Generators an das elektrische Netz vorgesehen ist, die ein Umrichtersystem (230) ist, das mehrere aktive Schalter aufweist und mindestens ein Funktionsmodul (250, 250') so ausgebildet ist, dass es mindestens die aktiven Schalter des Umrichtersystems (230) zumindest teilweise umfasst.

## Beschreibung

Die vorliegende Erfindung betrifft eine Windenergieanlage mit einem elektrischen System.

Bekannte Windenergieanlagen weisen einen Rotor mit mindestens einem Rotorblatt auf, der mit einem Generator zur elektrischen Leistungserzeugung gekoppelt ist, wobei die erzeugte Leistung in der Regel in ein elektrisches Stromnetz eingespeist wird.

Elektrische Stromnetze geben für den Netzanschluss von z. B. einer Windenergieanlage Mindestanforderungen vor, wie z. B. die Einhaltung der Netzfrequenz, Wirkleistungsabgabe und Blindleistungsbereitstellung, um die Sicherheit und Zuverlässigkeit des Netzbetriebs zu gewährleisten.

Um diese Anforderungen zu erfüllen, ist in Windenergieanlagen ein elektrisches System vorgesehen, über das unter anderem die vorgegebenen Parameter der öffentlichen Stromnetze einstellbar sind, aber auch z. B. die Regelung und Steuerung der Anlage z. B. über eine Winkelverstellung der Rotorblätter durchgeführt wird.

Das elektrische System besteht im allgemeinen aus unterschiedlichen Systemeinheiten, wobei die Systemeinheiten elektronische, elektrische und/ oder elektromechanische, und/ oder sensorische Komponenten, und/ oder elektrische Schutzeinrichtungen aufweisen.

Elektronische Komponenten können zum Beispiel Steuerungsrechner sein. Elektrische Komponenten können Steuerkabel, Spannungsversorgungen oder aber auch unterbrechungsfreie Spannungsversorgungen sein. Zu den elektromechanischen Komponenten gehören z. B. Relais, Schütze. Sensorische Komponenten umfassen alle Einrichtungen zum Erfassen von Meßdaten wie zum Beispiel Sensoren zur Messung von Temperatur, Druck, Drehzahl und Windgeschwindigkeit.

In der Regel umfassen die elektrischen Systemeinheiten mindestens eine Einrichtung zur Kopplung des Generators an ein elektrisches Stromnetz sowie eine Steuerungseinrichtung mit einem Betriebsführungsrechner, die unter anderem die elektrische Leistungserzeugung optimiert.

Damit eine Windenergieanlage Gewinne erwirtschaftet, ist es notwendig, dass sie bei entsprechendem Windaufkommen zuverlässig verfügbar ist. Daher sind die Anlagen generell so ausgelegt, dass Stillstandszeiten aufgrund von Defekten in der Anlage vermieden werden. Ein Beispiel dafür ist der Einsatz besonders hochwertiger Komponenten, die geringe Ausfallquoten aufweisen.

Für den Fall, dass dennoch ein Defekt auftritt, muss ein Techniker zu der Anlage fahren und den Defekt vor Ort beheben. Besonders bei Offshore-Anlagen ergibt sich aber das Problem, dass ein Techniker bei ungünstigen Wetterverhältnissen die Anlage nicht oder nur schwer erreichen kann. Dies hat zur Folge, dass bei gleichzeitigen Auftreten eines Defekts und ungünstigen Wetterverhältnissen ein Techniker nicht umgehend zu der Anlage gelangen kann um den Defekt zu beheben, so dass die Anlage über einen längeren Zeitraum still steht und keinen Gewinn erwirtschaftet.

Auch kann es vorkommen, dass die Wetterbedingungen, insbesondere die Wellenhöhe nur einen Zugang über das Helikopter-hoisting-Verfahren zulassen, bei dem der Techniker sowie benötigtes Werkzeug und Ersatzteile von einem Hubschrauber auf eine Plattform abgeseilt werden. In diesem Falle ist es nur möglich, kleinere Reparaturen durchzuführen, der Austausch größerer Komponenten ist aber unmöglich.

Da es sich aber besonders bei Offshore-Anlagen um Anlagen handelt, die aufgrund ihrer Größe besonders ertragreich arbeiten, ist der wirtschaftliche Verlust bei Ausfall einer Anlage auch besonders hoch.

Aufgabe der vorliegenden Erfindung ist die Schaffung einer Windenergieanlage mit einem elektrischen System, die auftretende Defekte kompensiert, so dass die Anlage betriebsbereit bleibt und unnötige Stillstandszeiten und damit verbundene Kosten vermieden werden.

Gelöst wird die Aufgabe durch eine Windenergieanlage mit einem elektrischen System, die die Merkmale des Anspruchs 1 aufweist.

Die erfindungsgemäße Windenergieanlage weist einen Rotor mit mindestens einem Rotorblatt auf, der direkt oder indirekt mit einem Generator zur elektrischen Stromerzeugung gekoppelt ist, und einem elektrischen System, bestehend aus unterschiedlichen elektrischen Systemeinheiten, die elektronische, elektrische und/ oder elektromechanische, und/ oder sensorische Komponenten und/ oder elektrotechnische Schutzeinrichtungen aufweisen.

Erfindungsgemäß sind alle Komponenten einer elektrischen Systemeinheit oder bestimmte Komponenten der elektrischen Systemeinheit entsprechend ihrer Aufgaben in ein oder mehrere Funktionsmodule (250, 250') zusammengefasst, die mindestens eine Funktion in Verbindung mit der elektrischen Leistungserzeugung ausführen, zusammengefasst, wobei zu mindestens einem Funktionsmodul mindestens ein Parallelmodul vorgesehen ist, das bei Normalbetrieb der Anlage eine gleiche oder ähnliche Funktion des Funktionsmodul ausführt oder ausführen kann, und wobei Funktionsmodul und Parallelmodul dergestalt miteinander verbunden oder verbindbar sind, dass bei einer Betriebsstörung, bei der ein Funktionsmodul oder ein Parallelmodul ausfällt, das verbleibende funktionsfähige Funktions- oder Parallelmodul zumindest teilweise die elektrische Leistungserzeugung aufrecht erhält.

Gemäß der vorliegenden Erfindung werden bestimmte oder alle Komponenten der Systemeinheiten in Funktionsmodule zusammengefaßt. Die entstehenden Funktionsmodule sind so gestaltet, dass sie bestimmte Funktionen im Zusammenhang mit der elektrische Leistungserzeugung der Anlage ausführen. Zu einem Funktionsmodul ist mindestens ein Parallelmodul vorgesehen, dessen wesentliche Aufgabe das Aufrechterhalten der elektrischen Leistungserzeugung ist.

Durch das Vorsehen des Parallelmoduls wird die Möglichkeit geschaffen, mit dem Auswechseln eines defekten Funktionsmoduls bis zur Besserung der Wetterbedingungen oder bis zum nächsten regulären Wartungstermin zu warten. Dies bietet besonders bei Offshore-Anlagen den Vorteil, dass die Fahrten zu den Anlagen weitgehend auf die regulären Wartungstermine begrenzt und auf diese Weise die Reparaturkosten gesenkt werden können.

Gemäß Anspruch 1 kann das Parallelmodul und zum Teil auch das Funktionsmodul unterschiedlich ausgestaltet sein, um diese Aufgabe zu erfüllen.

Zum einen kann das Parallelmodul so ausgebildet sein, dass es eine gleiche Funktion wie das Funktionsmodul ausführt. Dabei kann das Parallelmodul diese Funktion gleichzeitig mit dem Funktionsmodul ausführen, das bedeutet, die Funktion zur Erzeugung der elektrischen Leistung gemeinsam von beiden Modulen ausgeführt wird, so das bei einer Betriebsstörung, bei der ein Funkions-oder ein Parallelmodul ausfällt, die Leistungserzeugung über das verbleibende Modul entsprechend seines Funktionsanteils weiter erfolgt und somit auf vorteilhafte Weise ein kontinuierlicher, wenn auch eingeschränkter Betrieb der Anlage gewährleistet werden kann.

Eine Anordnung ist im Bereich der Generatortechnik seit vielen Jahren bekannt. Dort wurde aus wirtschaftlichen Überlegungen heraus das Generatorsystem in zwei bis vier parallel geschalteten Generatoren aufgesplittet, z.B. zwei 750kW Generatoren für eine 1,5MW Anlage oder vier 250kW Generatoren für eine 1MW Anlage. Hintergrund dieser Entwicklungen war aber ausschließlich dass Problem, dass die großen Generatoren nicht oder nur mit erheblich höheren Kosten produziert werden konnten, als eine größere Anzahl kleinerer Einheiten, d.h. die Reduktion der Investitionskosten ist das Ziel gewesen. Insbesondere die Getriebe dieser Maschinen waren aber nicht dafür geeignet, bei Ausfall einer der Generatoren die Stromerzeugung fortzusetzen, da die unsymmetrische Belastung zu Getriebeschäden führte.

Eine Generatoranordnung, die zur Aufrechterhaltung der Stromerzeugung neben einem Läufer wenigstens zwei Statoren aufweist, wobei jedem Stator wenigstens ein Umrichter zugeordnet ist, ist auch aus der DE 100 40 273.9 A1 bekannt. Jedoch weist die Ausbildung eines Generators, der wenigstens zwei Statoren aufweist den großen Nachteil auf, dass dadurch erhebliche Mehrkosten enstehen. Auch bei der erfindungsgemäßen Ausführung werden die Investitionskosten durch den komplexeren Aufbau zunächst erhöht, jedoch nicht in dem gleichen Maß, wie sie durch die Ausbildung eines Generators mit wenigstens zwei Statoren entstehen würde. Die geringeren Mehrkosten bieten gegenüber dem Stand der Technik den wesentlichen Vorteil, dass eine Amortisierung der Mehrkosten durch die höhere Zuverlässigkeit bei der Stromerzeugung über die 20 jährige Lebensdauer der Windenergieanlage schneller erreicht wird. Weiterhin kann das Parallelmodul so ausgebildet sein, dass es eine ähnliche Funktion, wie das Funktionsmodul ausführt, wobei diese ähnliche Funktion aber ebenso zur Leistungserzeugung beiträgt oder beitragen kann, wie die gleiche Funktion. Beispielsweise kann das Parallelmodul kleiner dimensioniert sein, als das Funktionsmodul und damit in der Herstellung billiger sein.

Dabei kann das Parallelmodul ebenfalls so angeordnet sein, dass es die Funktion gemeinsam mit dem Funktionsmodul ausführt.

Es ist bekannt, dass eine Windenergieanlage zwei Steuerungsrechner aufweisen kann, die üblicher Weise in einer Master/ Slave-Anordnung ausgebildet ist. Der erste Steuerungsrechner (Master) ist z. B. für die übergeordnete Betriebsführung und für die Anpassung der Anlage an das elektrische öffentliche Netz zuständig, insbesondere das Anpassen der erzeugten elektrischen Energie an die vorgegebenen Einspeisungsparameter des öffentlichen Netzes.. Der zweite Steuerungsrechner (Slave) übernimmt die Sensordatenerfassung und -auswertung und die Steuerung und Regelung der Anlage bezüglich kurzzeitiger Betriebsvorgänge. Gemäß der vorliegenden Erfindung können beide Rechner so ausgebildet sein, dass bei Ausfall eines Rechners der andere Rechners dessen Funktion übernehmen kann. Dabei können die Rechner auch überdimensioniert ausgebildet sein, so dass der verbleibende Rechner bei einem Ausfall die Funktion komplett übernehmen kann. Aus Kostengründen bietet es sich aber an, die Überdimensionierung der Rechner so gering wie möglich auszuführen, so dass im wesentlichen die Aufrechterhaltung der Stromerzeugung gewährleistet wird, auch wen dies den Nachteil bietet, dass der verbleibende Rechner bestimmte Betriebssituationen zum Beispiel Optimierungsmaßnahmen hinsichtlich der Leistungserzeugung oder das Ausregeln extremer Umgebungsereignisse (extreme Windböen, extreme Netzereignisse wie z.B. Spannungs- oder Frequenzeinbrüche) nicht mehr ausführen kann.

Es besteht aber auch die Möglichkeit, dass das Parallelmodul während des Normalbetriebs der Anlage die Funktion nicht ausführt, sondern dergestalt in die Anlage eingebunden ist, dass es erst bei Ausfall des Funktionsmoduls aktiviert wird und die Funktion des ausgefallenen Funktionsmoduls übernimmt und so die Leistungserzeugung zumindest teilweise aufrecht erhalten wird.

So können zum Beispiel die sensorischen Komponenten, die die äußeren Einflüsse wie Windgeschwindigkeit, Temperatur etc. messen, zu einem Funktionsmodul "Sensorik" zusammengefaßt sein. Entsprechend könnte hierzu ein Parallelmodul vorgesehen sein, das die gleichen sensorischen Komponenten umfasst. Fällt das Funktionsmodul "Sensorik" aus irgendeinem Grund aus, dann wird das Parallelmodul "Sensorik" aktiviert und übernimmt dessen Aufgabe.

In einer vorteilhaften Ausgestaltung der Erfindung kann das Parallelmodul auch so ausgebildet sein, dass es bei Ausfall des Funktionsmoduls dessen Funktion vollständig übernehmen kann. Diese Ausgestaltung bietet den Vorteil, dass das Parallelmodul quasi als Ersatzmodul fungiert, so das bei Ausfall des Funktionsmoduls die elektrische Leistungserzeugung vollständig aufrecht erhalten werden kann und keine wirtschaftlichen Verluste entstehen.

In einer weiteren vorteilhaften Ausgestaltung der Erfindung kann vorgesehen sein, dass die Windenergieanlage mindestens zwei Funktionsmodule, die gleiche oder ähnliche Funktionen ausführen, sowie mindestens ein Parallelmodul aufweist, wobei das Parallelmodul bei Ausfall eines Funktionsmoduls dessen Funktion vorzugsweise vollständig übernimmt.

Das Vorsehen von mindestens zwei Funktionsmodulen, die eine Funktion in Verbindung mit der Erzeugung der elektrischen Leistung gemeinsam ausführen, bietet den Vorteil, dass das Parallelmodul, ebenfalls nur halb so groß dimensioniert sein muss, damit bei Ausfall einer Komponente gewährleistet werden kann, dass die Leistungserzeugung vollständig aufrecht erhaltbar ist. Eine Erhöhung der Anzahl der Funktionsmodule reduziert die Größe des erforderlichen Parallelmoduls entsprechend. Je nach Ausfallwahrscheinlichkeit und Kosten des entsprechenden Funktionsmoduls lässt sich die wirtschaftlich optimale Konfiguration individuell bestimmen.

Es besteht aber auch die Möglichkeit, beispielsweise das Parallelmodul gemäß einer weiteren vorteilhaften Ausgestaltung der Erfindung kleiner und damit günstiger zu dimensionieren, so dass es die Aufgabe des Funktionsmoduls nur teilweise übernimmt. Diese Ausgestaltungsmöglichkeit bietet den Vorteil, dass auf kostengünstige Weise die Erzeugung der elektrischen Leistung zumindest teilweise aufrecht erhaltbar ist.

Bei der vorstehenden einfachen Redundanz des Steuersystems besteht die Schwierigkeit, bei einer Abweichung zwischen den Ergebnissen von zwei Modulen das fehlerhafte Modul zu diagnostizieren. Deshalb ist es vorteilhaft, die dreifache Ausführung besonders störanfälliger Elemente vorzusehen. Dies ermöglicht dann nach dem Prinzip der Mehrheitsentscheidung die zuverlässige Diagnose ausgefallener oder fehlerhafter Module, solange nur ein von drei Modulen ausfällt. Bei Ausfall von zwei Modulen ist aber ebenfalls die Diagnose durch eine auf Plausibilitätsprüfung ausgerichtetes Steuerprogramm (Expertensystem) realisierbar.

Gemäß einer weiteren vorteilhaften Ausgestaltung der Erfindung kann eine elektrische Systemeinheit eine Steuerungseinrichtung zur Optimierung der elektrischen Stromerzeugung umfassen, wobei die Steuerungseinrichtung mindestens einen Betriebsführungsrechner aufweist.

Zusätzlich kann die erfindungsgemäße Windenergieanlage gemäß einer weiteren vorteilhaften Ausgestaltung mindestens ein Versorgungsmodul aufweisen, dass die Steuerungseinrichtung mit elektrischer Energie versorgt, wobei das Versorgungsmodul gemäß einer weiteren vorteilhaften Ausgestaltung der Erfindung so ausgebildet ist, dass es unabhängig vom öffentlichen elektrischen Netz ist.

Vorzugsweise sind mindestens zwei Versorgungsmodule für die Steuerungseinrichtung netzunabhängig ausgebildet, um somit auch bei Netzausfall die Versorgung der Steuerung sicherzustellen. Eine redundante Ausführung der netzunabhängigen Versorgung der Steuerung ist bei einer Windenergieanlage insbesondere deshalb von Wichtigkeit, weil beim Ausfall der Steuerung eine Notbremsung durchgeführt wird, die alle Anlagenkomponente stark beansprucht und zu hohem Verschleiß führt.

Besonders vorteilhaft ist vorgesehen, die redundante Versorgung mit unterschiedlichen physikalischen Wirkprinzipien zu realisieren. Die im Stand der

Technik oft eingesetzten handelsüblichen, batteriegestützten Systeme (auch USV oder UPS genannt) weisen in der Praxis den Nachteil auf, insbesondere bei tiefen Temperaturen sehr störanfällig zu sein. Die Kombination von mindestens zwei Versorgungen mit unterschiedlicher Funktionsweise ist daher ausdrücklich Bestandteil der vorliegenden Erfindung. Besonders geeignet ist die Kombinationen eines preiswerten Batteriespeicher mit dem sehr zuverlässigen, aber teuren Kondensator-Speicher (UltraCaps). Um für eine längere Zeitdauer bei Netzausfall die Versorgung der Steuereinheit zu ermöglichen, bietet sich die Kombination mit einer Solarzelle oder mit einem Kleinwindrad oder der Kombination von beidem für besonders hohe Versorgungssicherheit an. Solarzelle oder Kleinwindrad können vorteilhaft oben auf der Maschinengondel, unterhalb des Rotors seitlich am Turm oder bei Offshore-Windenergieanlagen an einer am Turm befestigten Plattform angebracht sein. Die Orientierung ist zur Sonnenseite und/oder der Luvseite der Hauptwindrichtung auszuführen, um maximale Versorgungssicherheit zu gewährleisten.

Gemäß einer weiteren vorteilhaften Ausgestaltung kann mindestens eine weitere Steuerungseinrichtung vorgesehen sein, wobei die erste Steuerungseinrichtung als Funktionsmodul und die zweite Steuerungseinrichtung als Parallelmodul einsetzbar ist. Diese Ausgestaltung bietet den Vorteil, dass auch bei einem kompletten oder partiellen Ausfall der Steuerungseinrichtung die Leistungserzeugung stets aufrecht erhalten werden kann.

In einer weiteren vorteilhaften Ausgestaltung der Erfindung kann vorgesehen sein, dass zu mindestens einer der elektronischen, elektrischen und/ oder elektromechanischen Komponenten mindestens eine Ersatzkomponente vorgesehen ist, wobei Komponenten und Ersatzkomponenten dergestalt miteinander verbunden sind, dass bei einer Betriebsstörung in einer Komponente die Ersatzkomponente deren Aufgabe übernimmt.

Es ist bekannt für sensorische Komponenten wie zum Beispiel das Anemometer zur Messung der Windgeschwindigkeit eine Ersatzkomponente vorzusehen. Dies wird bisher aber nur für sensorische Komponenten vorgenommen, deren fehlerhafte Anzeige ein erhebliches Sicherheitsrisiko für die gesamte oder wesentliche Teilbereiche der Anlage darstellt.

Das Vorsehen von Ersatzkomponenten bietet den Vorteil, dass auch bei Ausfall einer Komponente ein kontinuierlicher Betrieb der Windenergieanlage gewährleistet werden kann.

Dabei ist es nicht erforderlich für jede Komponente eine Ersatzkomponente vorzusehen. Vorteilhaft ist eine intelligente Vorauswahl der Komponenten für die das Vorsehen einer Ersatzkomponente sinnvoll wäre. Diese Vorauswahl kann zum Beispiel Komponenten betreffen deren Ausfall zu einem sofortigen Stop der Anlage führen würde. Sie kann aber auch Komponenten betreffen, bei denen es aufgrund von Erfahrungen mit Windenergieanlagen bekannt ist, dass sie besonderen Belastungen ausgesetzt sind. Auch bietet es sich an, Komponenten doppelt vorzusehen, deren Ausfallverhalten generell bekannt ist.

In einer weiteren Ausführungsform der Erfindung ist die Windenergieanlage so ausgebildet, dass sie über ein Fernüberwachungsystem fernwartbar ist.

Zusätzlich kann das Fernüberwachungssystem auch so ausgebildet sein, dass es auf die Steuerungseinrichtung der Windenergieanlage zugreifen kann.

Die Steuerungseinrichtung einer modernen Windenergieanlage ist in der Regel so ausgebildet, dass sie über sogenannte Steuerungsparameter parametrierbar, d.h. z.B. auf den speziellen Anlagentyp oder die individuellen Standortgegebenheiten einstellbar ist.

Weiterhin werden der Steuerungseinrichtung Umgebungs- und Anlagenparameter zugeführt, wobei es sich bei Umgebungsparametern um Parameter handelt, die die Umgebung der Anlage betreffen, wie zum Beispiel Lufttemperatur, Luftdruck und Windgeschwindigkeit. Die Umgebungsparameter werden in der Regel von der Anlagensensorik gemessen und die gemessenen Werte werden der Steuerungseinrichtung mitgeteilt. Spezielle Parameter, wie z.B. die aktuellen Anforderungen der Netzbetreiber können der Anlagensteuerung aber auch extern, z. B. über Datenleitungen mitgeteilt werden.

Anlagenparameter sind die Anlage betreffende Parameter, diese Parameter werden in der Regel während des Betriebs in der Anlage gemessen und der Steuerungseinrichtung mitgeteilt. Dabei kann es sich zum Beispiel um die elektrische Leistung, die Drehzahl des Rotors, die Drehzahl des Generators, die Blatteinstellwinkel, die Temperatur der Anlage oder bestimmter Komponenten, Module oder Systemeinheiten, Hydraulikdrücke, die Messung elektrischer Ströme oder Spannungen, etc. handeln.

Die Fernwartbarkeit einer Windenergieanlage über ein Fernüberwachungssystem bietet zum einen den Vorteil, dass der Betrieb der Anlage aus der Ferne überprüft werden kann. Zum Beispiel kann der Betreiber der Anlage über das Fernüberwachungssystem die Ergebnisse der Leistungserzeugung abfragen. Es besteht aber auch die Möglichkeit, dass über das Fernüberwachungssystem eine Betriebsstörung in der Anlage angezeigt wird, wobei in einer vorteilhaften Ausgestaltung der Erfindung, das Fernüberwachungssystem zum Beispiel auch so ausgebildet sein kann, das ein Experte über das Fernüberwachungssystem eine komplette Fehlerdiagnose durchführt, um den Grund für die Betriebsstörung zu identifizieren.

Der Zugriff des Fernüberwachungssystem auf die Steuerungseinrichtung bietet zudem den Vorteil, dass der Steuerungseinrichtung geänderte Steuerungs-, Umgebungs- und Anlagenparameter zugeführt werden können. Es wird damit aber auch die Möglichkeit geschaffen, beispielsweise eine neue Betriebssoftware über das Fernüberwachungssystem auf den Betriebsführungsrechner der Steuerungseinrichtung zu übertragen und zu aktivieren.

Aufgrund der Femwartbarkeit über das Fernüberwachungssystem wird zudem die Möglichkeit geschaffen, dass nachdem ein Fehler in der Anlage diagnostiziert worden ist, eine Fehlerbehebung über das Fernüberwachungssystem durchgeführt werden kann, so dass der Betrieb der Anlage aufrecht erhalten wird.

Zudem kann das Femüberwachungssystem, wenn die Windenergieanlage zu einem Windpark, der aus mehreren Windenergieanlagen besteht, gehört, Teil der Parksteuerung sein oder mit dieser gekoppelt. Häufig wird die über die Windenergieanlagen erzeugte Gesamtleistung eines Windparks zusammen in das elektrische Netz eingespeist. Um die Gesamtleistung der Anlagen an die Netzanforderungen anzupassen, kann durch diese Ausgestaltung die Parksteuerung über das Fernüberwachungssystem auf die Anlage zugreifen und die Leistung der Anlage entsprechend modifizieren.

In einer vorteilhaften Ausgestaltung der Erfindung kann die Windenergieanlage so ausgebildet sein, dass die Steuerungseinrichtung eine Betriebsführung mittels Umgebungs- und Anlagenparametern durchführt. Betriebsführung heißt in diesem Zusammenhang sowohl die Steuerung bzw. Regelung der Anlage im Betrieb zur Optimierung der Leistungserzeugung als auch die übergeordnete Betriebsführung über die Regelungs- und Steuerungsfunktionen ausgeführt werden, die nicht direkt mit der Leistungserzeugung zusammenhängen wie z.B. Windnachführung, Schmiermittelversorgung etc. sowie die sicherheitstechnische Überwachung und eventuelle Zustandsüberwachung der Systeme (Diagnose).

Generell ist die Betriebsführung einer Windenergieanlage so ausgelegt, dass die Anlage in zulässigen Bereichsgrenzen der Umgebungs- und Anlagenparametern betrieben wird, wobei diese Bereichsgrenzen über Auslegungsparameter definiert werden, dabei können Auslegungsparameter insbesondere spezielle Steuerungsparameter sein. Zum Beispiel kann durch die Auslegungsparameter vorgegeben sein, dass die Anlage nur in einem bestimmten Anlagentemperaturbereich gefahren werden soll und das bei Überschreiten dieses Temperaturbereichs beispielsweise die Generatorleistung reduziert wird, um die Anlagentemperatur zu senken.

Zudem kann über die Auslegungsparameter festgelegt sein, dass die Windenergieanlage bei sehr niedrigen Außentemperaturen so angefahren werden soll, dass die Anlage sehr langsam, im Extremfall über mehrere Stunden, hochgefahren wird, um auf diese Weise eine gleichmäßige Erwärmung aller Komponenten zu ermöglichen, bevor die Anlage unter Volllast betrieben wird.

In einem weiteren Beispiel kann über die Auslegungsparameter festgelegt sein, dass bei sehr turbulenten (böigen) Windverhältnissen die Nenndrehzahl der Windenergieanlage heruntergesetzt wird, um damit zu vermeiden, dass die Anlage durch eine starke Windböe in einen unzulässig hohen Drehzahlbereich gerät.

Die Auslegungsparameter können beispielsweise im Normalbetrieb als Standard-Auslegungsparameter in dem Betriebsführungsrechner der Steuerungseinrichtung hinterlegt sein, oder sie werden anhand von anderen in der Steuerung vorliegenden Daten vom Betriebsführungsrechner errechnet.

Bei einer Betriebsstörung kann der Betriebsführungsrechner in einer vorteilhaften Ausgestaltung der Erfindung auf Temporär-Auslegungsparameter zugreifen. Diese Temporär-Auslegungsparameter können im Betriebsführungsrechner für bestimmte Fälle der Betriebsstörung, zum Beispiel Ausfall eines Funktionsmoduls hinterlegt sein. Es gibt aber beispielsweise auch die Möglichkeit, dass der Betriebsführungsrechner die Temporär-Auslegungsparameter erst bei einer Betriebsstörung entsprechend des Störfalls erzeugt bzw. errechnet, ggf. mittels von dem Betriebsführungsrechner zugeführten Daten, die zum Beispiel manuell eingespeist werden.

Über die Temporär-Auslegungsparameter definiert der Betriebsführungsrechner an die Betriebsführung angepasste Temporär-Bereichsgrenzen für zulässige Umgebungs- und Anlagenparameter, die eine Aufrechterhaltung der elektrischen Leistungserzeugung ermöglichen.

Beispielsweise kann so bei einer Betriebsstörung bei einem von insgesamt vier parallelgeschalteten Funktionsmodulen im Umrichterbereich die Nennleistung eingehalten werden, wenn auf eine wünschenswerte, aber nicht unbedingt erforderliche Anforderung des Netzbetreibers verzichtet wird (zum Beispiel cos phi-Kompensation), und/oder die zulässige Außentemperatur unterhalb eines Grenzwertes (z.B. 15°C, um den Umrichter besonders wirkungsvoll zu kühlen) liegt und/oder der Drehzahlbereich des Generators eingeschränkt wird (z.B. +-10% Drehzahlbereich statt +-30% im Normalbetrieb (um die erforderliche Frequenzanpassung durch den Umrichter zu begrenzen)

Die oben beschriebene Ausgestaltungsmöglichkeit der Erfindung bietet den Vorteil, dass trotz Auftreten einer Betriebsstörung durch entsprechende Modifikation der Bereichsgrenzen der Umgebungs- und Anlagenparameter eine elektrische Leistungserzeugung erreicht wird, die vorzugsweise der Leistungserzeugung des Normalbetriebs der Anlage entspricht.

Hierbei ist es möglich, dass die Modifikation der Bereichsgrenzen nur zeitlich eingeschränkt zulässig ist, z.B. weil durch eine höhere mechanische oder thermische Belastung die Lebensdauer einer Komponente durch längerfristigen Betrieb verkürzt wird. Die Erfindung sieht vor, dass derartige zeitliche Begrenzungen in den temporären Auslegungsparametern enthalten sein können, und die Steuerung die Anlage bei Überschreitung des Grenzwertes abschaltet oder die Leistung der Anlage reduziert.

In einer weiteren Ausführungsform kann der Betriebsführungsrechner so programmiert sein, dass er so lange auf die Temporär-Auslegungsparameter zugreift, bis ein Normalbetrieb der Anlage wiederhergestellt ist.

Die oben beschriebenen Ausgestaltungen ermöglichen einen kontinuierlichen Betrieb einer Windenergieanlage, wobei dies im wesentlichen durch eine redundante Ausführung der Komponenten, Module oder Systemeinheiten des elektrischen Systems erreicht wird.

Da bei dem elektrischen System, insbesondere durch Überwachungs- und Steuerungseinrichtungen, die Komponenten, Module und Systemeinheiten ein stark vernetztes System darstellen, erfordert die redundante Ausführung von Komponenten, Modulen und Systemeinheiten einen mit deren Anzahl überproportional ansteigenden Aufwand an Verbindungsleitungen und Umschalteinrichtungen. Weiterhin besteht bei elektrischen Systemen die Gefahr, dass z.B. ein elektrischer Kurzschluss in einer Komponente über die Verbindungsleitungen zu Folgeschäden bei anderen Komponenten führt.

In einer vorteilhaften Ausgestaltung der Erfindung kann daher die Verbindung zwischen mindestens zwei der redundant ausgeführten Komponenten und/oder Modulen und/oder Systemeinheiten ausschließlich oder teilweise, mittels mindestens einem Bussystems erfolgen. In einer besonders vorteilhaften Ausführungsform sind, durch entsprechende Wahl des physikalischen Übertragungsmediums (z.B. optisch mit Lichtwellenleitern), die angeschlossenen Komponenten zusätzlich galvanisch entkoppelt. In einer besonders vorteilhaften Ausgestaltung können auch die Verbindungsleitungen des Bussystems redundant ausgelegt sein

Ein Bussystem besteht aus Busteilnehmern (z.B. Busaktoren, Bussensoren, Betriebsführungsrechner), einem Übertragungsmedium (z.B. Buskabel oder drahtlose Verbindungen) sowie einer besonderen Software, die auf einem der Busteilnehmern, in der Regel dem Betriebsführungsrechner, installiert ist. Die Busteilnehmer besitzen spezielle Busanschaltbaugruppen, die die Kopplung zum Bus vornehmen und die reibungslose Kommunikation auf dem Bus sicherstellen. Die Busanschaltbaugruppen bestehen aus einem Prozessor (Controller), einer Software sowie einer "Transceiver" genannten Ankopplungseinheit, welche die Umsetzung der Signale auf das Transportmedium durchführt. Die Bussensoren sind die sensorischen Komponenten der Windenergieanlage, die unter anderem zur Überwachung von Komponenten eingesetzt werden, während die Busaktoren die Komponenten und Funktionsmodule darstellen, über die Befehle ausführbar sind. Das Transportmedium kann hierbei konventionell als Drahtkabel, oder über optische Fasern realisiert werden. Die optische Ausführung bietet beim Einsatz in einer Windenergieanlage den Vorteil der EMV-Festigkeit (elektromagnetische Verträglichkeit) und Blitzschutzsicherheit, da Signalleitungen oft über große Strecken in der unmittelbarer Nähe von Leistungskabeln verlegt werden müssen. Die erfindungsgemäßen Ausführung des Bussystems erstreckt sich auf jegliche Art von Bussystemen, wie z.B.: CAN-Bus, insbesondere CANopen-Bus, Ethernet, Profibus DP/FMS, Interbus, TTP, FlexRay.

Vorteilhafter Weise dient das Bussystem sowohl zur Übertragung aller für die Steuerung und Betriebsführung erforderlichen Signale, als auch zur Überwachung und Aktivierung der erfindungsgemäßen redundanten Ausführungsform. Selbstverständlich umfasst die Erfindung aber auch Ausführungen, bei der die Signalübertragung für Steuerung und Betriebsführung vollständig von der Signalübertragung zur Überwachung und Aktivierung redundanter Module getrennt ist.

Die vorteilhafte Ausgestaltung der Erfindung bietet somit die Möglichkeit, dass insbesondere über einen entsprechend programmierten Betriebsführungsrechner der Defekt einer Komponente/Moduls/Systemeinheit mittels des Bussystems erkannt wird und daraufhin die Ersatzkomponente ohne Umschaltung von Verbindungsleitungen zur Signalübertragung aktiviert wird, so dass der Betrieb der Anlage aufrecht erhalten wird. Vorstellbar wäre aber auch hierfür eine zusätzliche Überwachungseinrichtung vorzusehen.

Je nach Art der Komponente/Moduls/Systemeinheit kann es jedoch erforderlich sein, zusätzliche Verbindungsleitungen zur Übertragung des Leistungsflusses zu schalten.

Vorzugsweise wird hierbei das Bussystem in einer netzwerkartigen Struktur realsiert, so das alle wesentlichen Funktionsmodule auch bei Ausfall einzelner Verbindungswege miteinander kommunizieren können. Jedes wesentliche Funktionsmodul muss dann als Busteilnehmer ausgeführt werden, die dadurch entstehenden Mehrkosten werden jedoch durch die höhere Zuverlässigkeit der Leistungserzeugung kompensiert.

Eine vorteilhafte Weiterbildung der Erfindung sieht vor, neben dem Betriebsführungsrechner weitere intelligente Busteilnehmer einzusetzen. Dies kann entweder über zusätzliche intelligente Verknüpfungsstellen erfolgen, oder durch einzelne, am Bussystem angeschlossene Funktionsmodule, die mit eigenen "intelligenten" Mikroprozessoren versehen werden. Diese allgemein intelligente Busfunktionsmodule genannten Busteilnehmer werden so programmiert, dass sie individuelle Aufgaben erfüllen. Z.B. wird so die selbstständige Überwachung eines Teils des Bussystems und der angeschlossenen Komponenten von dem intelligenten Busfunktionsmodul übernommen und bei Ausfällen Maßnahmen zur Umschaltung auf Parallelmodule eingeleitet (Intelligentes Bussystem).

Besondere Zuverlässigkeit erzielt man z. B. durch den Einsatz eines fehlertoleranten -Bussystems, der z.B. im Falle eines Fehlers in einem Busteilnehmer oder der Unterbrechung einer Verbindungsleitung eine Rekonfiguration des gesamten Netzwerks vornimmt und somit den Funktionsausfall des kompletten Bussystems verhindert.

Der Einsatz eines intelligenten Bussystems bietet somit einerseits den Vorteil, dass Fehler automatisch erkannt und behoben werden können, ohne dass hierfür Kapazitäten des Steuerungsrechner erforderlich sind, andererseits muss bei einem Ausfall bei einem intelligenten Bussystem mit mehreren intelligenten Verteilerstellen nur ein deutlich kleinerer Teil des Bussystems abgeschaltet werden als bei einem Systems, welches nur ein intelligentes Busfunktionsmodul (in der Regel den Betriebsführungsrechner) enthält.

In einer weiteren vorteilhaften Ausgestaltung der Erfindung kann das mindestens eine Rotorblatt so an dem Rotor angeordnet sein, dass seine Winkelstellung zu dem Rotor einstellbar ist. Diese Ausgestaltung bietet den Vorteil, dass eine Energieaufnahme des Rotors aus dem Wind durch Änderung der Winkelstellung regelbar ist, so dass die elektrische Leistungserzeugung auch bei starkem Wind aufrechterhalten werden kann, ohne dass die Anlage zu stark belastet wird. Weiterhin kann über die Verstellung der Rotorblattwinkel die Leistungserzeugung so geregelt werden, dass sie den Anforderungen des elektrischen Netz entspricht.

In einer besonders vorteilhaften Ausgestaltung der Erfindung kann die Windenergieanlage so ausgebildet sein, dass das elektrische System als weitere Systemeinheit ein Blattverstellsystem umfasst, über das die Winkelstellung des oder der Rotorblätter geregelt wird.

Eine weitere vorteilhafte Ausgestaltung der Erfindung sieht vor, dass die Einrichtung zur Kopplung des Generators an das elektrische Netz dergestalt ausgebildet ist, dass der Generator mit mindestens zwei unterschiedlichen Drehzahlen am Netz betrieben werden kann, wobei die Einrichtung in einer besonders vorteilhaften Ausgestaltung der Erfindung so ausgebildet ist, dass der Generator in einem variablen Drehzahlbereich betreibbar ist.

Hierbei ist sowohl an Kopplungseinrichtungen für polumschaltbare Generatoren gedacht, als auch an Kopplungseinrichtungen, die mittels elektromechanischer, elektrischer oder elektronischer Komponenten einen durch eine obere und eine untere Drehzahlgrenze begrenzten Drehzahlbereich aufweisen, wobei die untere Drehzahlgrenze auch 0 Umdrehungen/min sein kann, zwischen denen die Generatordrehzahl variiert werden kann.

Weiterhin sieht eine vorteilhafte Ausführungsform der Erfindung ein Umrichtersystem vor, bei dem die Anpassung des vom Generator erzeugten elektrischen Stroms an die Gegebenheiten des elektrischen Netzes über mehrere aktive Schalter, z.B. Thyristoren, GTO's, IGCT's oder IGBT's erfolgen kann.

Dabei können die aktiven Schalter gemäß weiterer vorteilhafter Ausgestaltungsmöglichkeiten der Erfindung über eine in dem Umrichtersystem angeordnete Umrichtersteuerungseinrichtung betätigt werden, die beispielsweise mit der Steuerungseinrichtung gekoppelt ist.

Gemäß einer erfindungsgemäßen Ausgestaltung kann ein Funktionsmodul so ausgebildet sein, dass es mindestens die aktiven Schalter bzw. einen Teil der aktiven Schalter des Umrichtersystems umfasst. Es besteht aber auch die Möglichkeit, mehrere Funktionsmodule vorzusehen, die aktive Schalter entsprechend ihrer Schaltaufgaben umfassen.

Eine besonders bevorzugte Ausführungsform der Erfindung sieht den Einsatz eines Wechselstrom-Generators vor. Diese Generatoren zeichnen sich durch eine hohe Zuverlässigkeit sowie besondere Wirtschaftlichkeit aus.

Ein Umrichtersystem, das einen solchen Generator an das elektrische Netz koppelt, kann gemäß einem weiteren Ausgestaltungsbeispiel so ausgebildet sein, dass es einen maschinenseitigen Wechselrichter (Diodengleichrichter oder Wechselrichter mit aktiven Schaltern) aufweist, der mit dem Generator gekoppelt ist und einen Wechselstrom zumindest teilweise in einen Gleichstrom oder eine Gleichspannung umwandelt. Weiterhin kann das Umrichtersystem einen Gleichstromzwischenkreis bzw. einen Gleichspannungszwischenkreis, der einen maschinenseitigen Wechselrichter mit einem netzseitigen Wechselrichter verbindet, aufweisen. Dabei ist der netzseitige Wechselrichter mit dem Netz gekoppelt und hat die

Aufgabe den über den maschinenseitigen Wechselrichter erzeugten Gleichstrom oder die erzeugte Gleichspannung in eine, an das elektrische Netz angepasste elektrische Leistung umzuwandeln. Zudem können in dem Umrichtersystem elektromechanische Schutzeinrichtungen zum Schutz der Anlage sowie Filter, die auf der Maschinenseite zum Beispiel die Spannungssteilheit begrenzen und auf der Netzseite die Netzqualität verbessern,vorgesehen sein.

Besonders vorteilhaft ist hierbei, den maschinenseitigen Wechselrichter mit aktiven Schaltern auszuführen, weil somit ein Leistungsfluss im Umrichtersystem in beiden Richtungen ermöglicht wird und eine Blindleistung erzeugt werden kann. Hierdurch ist es möglich, die Erregung des Generators und die Blindleistungserzeugung zu beeinflussen, was eine besonders wirtschaftliche Auslegung des Generators ermöglicht:
In einer besonders bevorzugten Ausgestaltung der Erfindung kann ein Funktionsmodul so ausgebildet sein, dass es mindestens den maschinenseitigen Wechselrichter, den Gleichstrom bzw. den Gleichspannungszwischenkreis sowie den netzseitigen Wechselrichter umfasst. In das Funktionsmodul können aber weitere Bauteile aufgenommen sein, wie zum Beispiel die elektrotechnischen Schutzeinrichtungen oder die Filter.

Diese Anordnung ist deshalb von großem Vorteil, weil so auf einfache Weise existierende Umrichtersysteme zu Systemen sehr großer Leistung zusammengeschaltet werden können, wodurch insbesondere bei dem rasanten Wachstum der Größe von Windenergieanlagen die Entwicklungszeiten verkürzt werden.

Eine sehr vorteilhafte Ausgestaltung der Erfindung sieht es nun vor, zu den genannten Ausführungsformen der Funktionsmodule des Umrichtersystems mindestens ein Parallelmodul vorzusehen, wobei Funktions- und Parallelmodul über trennbare Verbindungen direkt oder indirekt mit dem Generator sowie direkt oder indirekt (z.B. über eine dazwischengeschaltete Transformatoreinheit) mit dem elektrischen Netz verbunden sind.

Dieser besonders vorteilhaften Ausführungsform der Erfindung liegt die Erkenntnis zugrunde, dass die aktiven Schalter eines Umrichtersystems besonders störanfällige Bauteile sind. Aufgrund ihrer Vielzahl bietet die erfindungsgemäße Einbindung der aktiven Schalter über Funktionsmodule in das elektrische System eine einfache und effektive Möglichkeit, im Falle eines Schadens das ausgefallene Modul durch Öffnen der trennbaren Verbindungen zu isolieren, und so die Leistungserzeugung mithilfe der verbleibenden funktionsfähigen Funktions- und Parallelmodule ganz oder zumindest eingeschränkt aufrecht zu erhalten.

Die vorzugsweise vollständige Isolierung des ausgefallenen Funktionsmoduls ist deshalb von Wichtigkeit, weil sonst die Gefahr besteht, das z.B. durch einen Kurzschluss im ausgefallenen Funktionsmodul benachbarte Module geschädigt werden.

Eine vorteilhafte Ausgestaltungsform der Erfindung sieht es vor, dass die trennbaren Verbindungen durch Schaltelemente realisiert werden. Diese Ausgestaltung bietet unter anderem den Vorteil, dass das Öffnen der trennbaren Verbindung auch von gering qualifiziertem Personal zum Beispiel manuell durchgeführt werden kann, da keine spezielle elektrotechnischen Vorkenntnisse erforderlich sind, solange die Schaltelemente eindeutig gekennzeichnet sind.

Besonders vorteilhaft, insbesondere für geplante Offshore-Anlagen ist eine erfindungsgemäße Weiterbildung der Erfindung, bei der die Schaltelemente durch das Fernüberwachungssystem schaltbar sind. In diesem Fall ist überhaupt kein Techniker vor Ort erforderlich, um nach einer Betriebsstörung eines Funktionsmoduls die Leistungserzeugung zumindest teilweise aufrecht erhalten zu können. In weiteren vorteilhaften Ausgestaltungen können die Schaltelemente auch automatisch beispielsweise über die Steuerungseinrichtung und/ oder die Fern-überwachung betätigt werden.

Eine weitere, sehr vorteilhafte Ausgestaltung der Erfindung sieht vor, dass mindestens eine trennbare Verbindung zwei in Reihe geschaltete Schaltelemente aufweist, von denen eines ein Leistungsschalter und das andere ein Schütz oder ein aktiver Schalter (z. B. ein Thyristor) ist. Hintergrund dieser Erfindung ist die Erkenntnis, dass ein Leistungsschalter zusätzlich zur gewünschten Schaltfunktion auch noch eine Sicherheitsfunktion ausübt, da er durch Überlastung bei einem Grenzstrom auslöst. Andererseits ist ein Leistungsschalter nur für eine sehr begrenzte Anzahl von Schaltspielen geeignet, so dass häufige Schaltspiele von dem in Reihe liegenden Schütz übernommen werden, welches seinerseits aber keine Sicherheitsfunktion bietet. Somit wird auf einfache und effektive Weise eine Anordnung von Funktionsmodul und Parallelmodul mit ähnlicher Funktion geschaffen, bei der bei einer Funktionsstörung des einen Moduls das andere Modul die Funktion nahezu vollständig übernimmt.

Weitere Merkmale, Aspekte und Vorteile der vorliegenden Erfindung werden zum Teil durch die nachfolgende Beschreibung offenbart und sind zum Teil durch die Beschreibung nahegelegt oder ergeben sich bei der praktischen Verwendung der Erfindung. Eine Ausführungsform der Erfindung wird nachfolgend hinreichend im Detail beschrieben. Es versteht sich, dass andere Ausführungsformen verwendet werden und Änderungen gemacht werden können, ohne den Bereich der Erfindung zu verlassen. Die folgende ausführliche Beschreibung ist daher nicht in einem beschränkten Sinn zu sehen, und der Bereich der vorliegenden Erfindung ist am besten durch die anhängenden Ansprüche definiert.

Im folgenden soll die vorliegende Erfindung anhand eines Ausführungsbeispiel erläutert werden. Es zeigt:
- Fig 1: einerfindungsgemäßes elektrisches System einer Windenergieanlage.
- Fig 2: eine erfindungsgemäße redundante Steuerungseinrichtungen einer Windenergieanlage

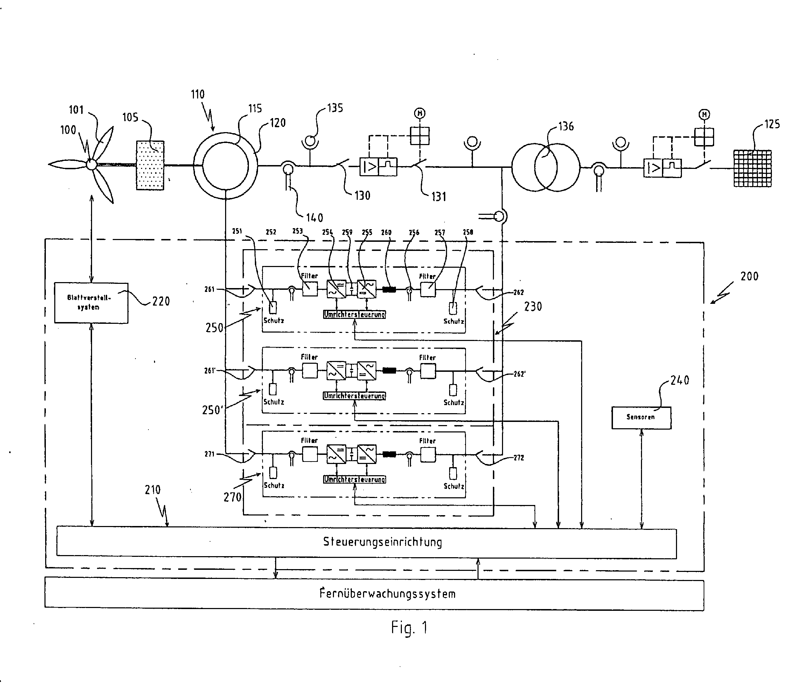

Die Fig 1 zeigt einen Rotor 100 mit winkelverstellbaren Rotorblättern 101 einer Windenergieanlage, der über Wind in eine Drehbewegung versetzbar ist. Der Rotor 100 ist über ein Getriebe 105 mit einem Generator 110 verbunden und erzeugt durch die Drehbewegung des Rotors eine elektrische Leistung.

Der Generator 110 weist einen Generatorrotor 115 und einen Generatorstator 120 auf, wobei der Generatorstator 120 über mindestens einen Transformator 136 mit einem elektrischen Netz 125 gekoppelt ist. Zwischen dem Generatorstator 120 und dem elektrischen Netz 125 ist ein Schaltelement 130 (z.B. Schütz oder aktiver Schalter, wie IGBT oder Thyristorschalter oder ähnliches) und ein Leistungsschalter 131 oder ähnliches in Reihe angeordnet, die im geschlossenen Zustand den Generator 110 mit dem elektrischen Netz 125 verbinden. Im Bedarfsfall, zum Beispiel wenn der Betreiber des elektrischen Netz 125 dies fordert, kann durch Öffnen der Schalter der Generator 110 vom elektrischen Netz 125 abgekoppelt werden.

Zur Überwachung der erzeugten elektrischen Leistung zwischen dem Generator 110 und dem elektrischen Netz 125 ist weiterhin eine Einrichtung zur Messung der elektrischen Spannung 135 sowie eine Einrichtung zur Messung des elektrischen Stroms 140 angeordnet.

Der Generatorrotor 120 ist mit einem elektrischen System 200 gekoppelt. Das dargestellte elektrische System 200 umfasst folgende elektrische Systemeinheiten: eine Steuerungseinrichtung 210, ein Blattverstellsystem 220 sowie ein Umrichtersystem 230.

Über die Steuerungseinrichtung 210 erfolgt die Regelung sowie die Betriebsführung der Windenergieanlage. Daher ist die Steuerungseinrichtung 210 mit den anderen Systemeinheiten des elektrischen Systems 200 gekoppelt und kann deren Funktionsweise dergestalt Regeln und Steuern um eine optimale Leistungserzeugung zu erreichen, die zusätzlich den Netzanforderungen des Betreibers eines elektrischen Netz 125 genügt. Der Steuerungseinrichtung 210 werden alle wesentlichen Parameter, wie zum Beispiel Umgebungs- und Anlagenparameter zugeführt. Bei Umgebungsparametern kann es sich beispielsweise um, die Umgebung der Anlage betreffende Messdaten, wie zum Beispiel Luftdruck, Lufttemperatur oder Windgeschwindigkeit handeln, die mittels Sensoren 240 gemessen werden. Bei Anlagenparametern handelt es sich um Messgrössen, die den Betrieb der Anlage betreffen, die unter anderem über Messeinrichtungen wie beispielsweise die Einrichtung zur Messung der elektrischen Spannung 135 und die Einrichtung zur Messung der elektrischen Strom 140 erfasst werden können.

In dem dargestellten Ausführungsbeispiel ist die Steuerungseinrichtung 210 mit einem Fernüberwachungssystem gekoppelt, wobei das Fernüberwachungssystem an einem beliebigen Ort angeordnet sein kann. Mit Fernüberwachungssystem kann ein ortsunabhängiges Überwachungssystem und/ oder eine Einrichtung zur Parksteuerung gemeint sein.

Neben den dargestellten Systemeinheiten 220, 230 steuert die Steuerungseinrichtung 210 üblicherweise auch eine Vielzahl von Hilfssystemen wie z.B. Windnachführung, Kühlsysteme und Ölversorgung etc., die aber aus Übersichtlichkeitsgründen nicht dargestellt sind.

Über das Blattverstellsystem 220 kann die Einstellung des Winkels der Rotorblätter 101 zu dem Rotor 100 geregelt werden. Die Regelung der Winkelstellung der Rotorblätter erfolgt über die Steuerungseinrichtung 210, die auf das Blattverstellsystem zugreift. Über die Regelung der Winkelstellung ist unter anderem eine optimale Leistungserzeugung der Windenergieanlage einstellbar. Weiterhin kann darüber aber auch ein Abschalten der Anlage erreicht werden, indem die Rotorblätter in die sogenannte Fahnenstellung gedreht werden. Mit Fahnenstellung wird allgemein das Herausdrehen der Rotorblätter 101 aus dem Wind bezeichnet, so dass, wie bei einer Fahne, dem Wind nur eine minimale Angriffsfläche geboten wird.

In dem dargestellten Ausführungsbeispiel erfolgt die Regelung der, über den Generator erzeugten Leistung in eine, den Netzanforderungen des Betreibers eines elektrischen Netz entsprechende Leistung über einen sogenannten "doppelt-gespeisten" Asynchrongenerator.

Dabei wird ein Großteil der erzeugten Leistung über den Generatorstator 120 abgenommen. Ein kleinerer Teil der erzeugten Leistung wird über den Generatorrotor 115 in ein Umrichtersystem 230 geführt und dann gemeinsam mit der Statorleistung in das elektrische Netz 125 eingespeist. Die, über den Generatorrotor 115 "abgezweigte" Leistung wird über das Umrichtersystem 230 dergestalt umgerichtet, dass die in das Netz eingespeiste Leistung den Netzanforderungen entspricht.

Bekannte Umrichtersysteme für den doppelt-gespeisten Betrieb einer Windenergieanlage weisen im allgemeinen einen maschinenseitigen Wechselrichter auf, der mit dem Generatorrotor gekoppelt ist, sowie einen netzseitigen Wechselrichter, der mit dem elektrischen Netz gekoppelt ist. Je nach Betriebsform werden der maschinenseitige und der netzseitige Wechselrichter über ein Gleichspannungszwischenkreis oder einen Gleichstromzwischenkreis verbunden. Weiterhin weisen bekannte Umrichtersysteme maschinen- und netzseitige Schutzeinrichtungen sowie Filter auf.

Das dargestellte Umrichtersystem 230 zeigt eine vorteilhafte, erfindungsgemäße Ausführung eines Umrichtersystems.

In dem dargestellten Umrichtersystem 230 ist vorgesehen, ein bekanntes Umrichtersystem so weiterzubilden, dass die oben beschriebenen bekannten Teile in ein Funktionsmodul 250 zusammengefasst werden. Das Funktionsmodul 250 umfasst die folgenden Komponenten: eine maschinenseitige Schutzeinrichtung 251 (zum Beispiel Crowbar, Blitzschutz und/ oder Überspannungsschutz), eine Strommesseinrichtung 252, einen maschinenseitigen Filter 253 sowie einen maschinenseitigen Wechselrichter 254. Weiterhin umfasst das Funktionsmodul 250 die Bauteile: netzseitiger Wechselrichter 255, Netzdrossel 260, netzseitige Strommesseinrichtung 256, netzseitigen Filter 257 und netzseitige Schutzeinrichtung 258, wobei der maschinenseitige Wechselrichter und der netzseitige Wechselrichter über einen Gleichspannungszwischenkreis 259 verbunden sind.

Das Umrichtersystem ist vorteilhaft so ausgebildet, dass zu dem Funktionsmodul ein zweites Funktionsfunktionsmodul vorgesehen ist, wobei beide so dimensionert sind, dass sie die über den Generatorrotor 115 abgeführte Leistung zu gleichen Teilen umrichten können. Diese Ausführung bietet den Vorteil, dass bei Ausfall eines Funktionsmoduls, die Rotorleistung zumindest teilweise weiter umrichtbar ist und somit die Anlage weiterhin, wenn auch bzgl der maximalen Leistung eingeschränkt betriebsbereit ist.

In einer weiteren vorteilhaften Ausführung weist das dargestellte Umrichtersystem 230 ein Parallelmodul 270 auf, dass in dem Beispiel identisch zu den Funktionsmodulen 250 und 250' ausgebildet ist.

Das Parallelmodul 270 ist so in das Umrichtersystem 230 eingebunden, dass es bei Ausfall eines Funktionsmoduls 250, 250' dessen Funktion übernehmen kann. Somit ist auch bei Ausfall eines Funktionsmoduls 250, 250' sichergestellt, dass die Leistungserzeugung vollständig aufrecht erhalten werden kann.

Die Funktionsmodul 250 und 250' sind über maschinenseitige Schalter 261, 261' als auch über netzseitige Schalter 262, 262' von dem elektrischen System 200 trennbar. Gleiches gilt für das Parallelmodul 270, das über den maschinenseitigen Schalter 271 sowie den netzseitigen Schalter 272 von dem elektrischen System trennbar ist.

Im Normalbetrieb wird durch Schließen der Schalter 261, 261', 262, 262' die Rotorleistung über die Funktionsmodule 250 und 250' umgerichtet und das Parallelmodul 270 ist vom elektrischen System 200 durch die geöffneten Schalter 271, 272 isoliert. Bei Ausfall eines Funktionsmoduls 250, 250' wird durch Öffnen der entsprechenden Schalter des defekten Funktionsmodul vom elektrischen System isoliert und die Schalter 271, 272 geschlossen und somit das Parallelmodul 270 in das elektrische System 200 integriert, so das die Rotorleistung über das funktionsfähige Funktionsmodul 250, 250' und das Parallelmodul 270 umgerichtet wird.

In den Funktionsmodulen 250 und 250' sowie dem Parallelmodul 270 ist weiterhin eine Umrichtersteuerung, über die die Steuerung der Wechselrichter erfolgt, wobei die Umrichtersteuerung wiederum mit der Steuerungseinrichtung 210 gekoppelt ist. Grundsätzlich kann die Umrichtersteuerung auch direkt in der Steuerungseinrichtung integriert sein oder zentral in einer Einheit zusammengefasst sein, die den gesamten Umrichter steuert (anstatt der dezentralen dargestellten Aufteilung in den einzelnen Modulen).

In der Fig 1 sind nur die für die Erläuterung des Ausführungsbeispiel wesentlichen Bauteile dargestellt worden. Weitere für den Aufbau und den Betrieb wesentliche Bauteile wie z.B. Sicherungen oder der detaillierterer Aufbau der Crowbar sind aus Übersichtlichkeitsgründen nicht dargestellt worden.

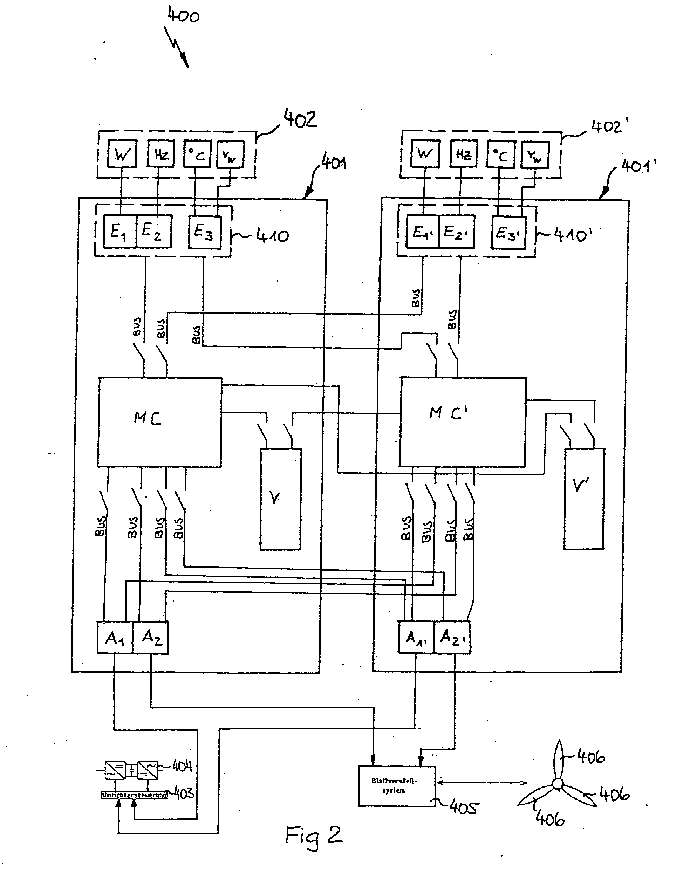

In der Fig 2 ist ein Ausführungsbeispiel für die redundante Auslegung einer Steuerungseinrichtung dargestellt.

Die in Fig 2 dargestellte redundante Steuerungseinrichtung 400 umfasst zwei Schaltschränke 401 und 401'. In den Schaltschränken 401 und 401' sind jeweils ein als Microcontroller ausgeführter Betriebsführungsrechner MC und MC' angeordnet. Die beiden Betriebsführungsrechner MC und MC' werden jeweils über eine Versorgung V und V' mit elektrischer Energie versorgt.

Weiterhin umfasst die redundante Steuerungseinrichtung 400 ein Funktionsmodul "Sensorik" 402 zu dem ein Parallelmodul "Sensorik" 402' vorgesehen ist. In den Sensorik-Modulen 402 und 402' sind Einrichtungen zusammengefasst, über die für den Betrieb der Anlage erforderliche Meßdaten erfassbar sind.

In dem dargestellten Ausführungsbeispiel sind in den Sensorik-Modulen zum Beispiel eine Meßeinrichtung W zur Erfassung der erzeugten der elektrischen Leistung, eine Meßeinrichtung Hz zur Erfassung der Frequenz, sowie Meßeinrichtungen °C und v_{w} zur Erfassung von z. B der Umgebungstemperatur und der Windgeschwindigkeit. Üblicher Weise besitzen heutige Windenergieanlagen mindestens 50 bis 100 unterschiedliche Sensoren, so dass es sich hier um ein stark vereinfachtes Beispiel zur Illustration handelt. Es ist durchaus auch denkbar, weitere oder andere sensorische Komponenten in diesem Funktionsmodul oder in einem weiteren Funktionsmodul zusammenzufassen und entsprechende Parallelmodule vorzusehen, wobei die Parallelmodule gemäß der vorliegenden Erfindung durchaus auch so ausgebildet sein können, dass sie nicht die gleichen Funktionen wie das Funktionsmodul sondern lediglich ähnliche Funktionen ausführen, wodurch aber eine gleiche, ähnliche oder zumindest betriebserhaltene Funktion durchgeführt werden kann.

Die redundante Steuerungseinrichtung 400 umfasst ferner in dem Schaltschrank 401 angeordnete Eingänge E₁, E₂ und E₃ sowie die Ausgänge A₁ und A₂. Die Eingänge E₁, E₂ und E₃ sind in dem dargestellten Ausführungsbeispiel zu einem Funktionsmodul 410 zusammengefasst, wobei die Eingänge E₁ und E₂ jeweils mit den Komponenten W und Hz des Sensorik-Moduls 402 und der Eingang E₃ mit den Komponente °C und v_{w} verbunden sind. In dem Schaltschrank 401' sind entsprechend die Eingänge E_{1'}, E_{2'} und E_{3'} und Ausgänge A_{1'}, und A_{'2} angeordnet und mit dem Sensorikmodul 402' verbunden, wobei die Eingänge E_{1'}, E_{2'} und E_{3'} zu einem Parallelmodul 410' zusammengefaßt sind.

Die Ausgänge A₁ und A_{1'} sind jeweils mit einer Umrichtersteuerung 403 verbunden. Die Umrichtersteuerung 403 hat die Aufgabe den Umrichter 404 dergestalt zu steuern, dass eine elektrische Leistung erzeugt wird, welche einerseits über das eingestellte Drehmoment die Rotordrehzahl im Sollbereich regelt und andererseits den Anforderungen des öffentlichen elektrischen Netzes entspricht. Demgegenüber sind die Ausgänge A₂ und A_{2'} mit einem Blattverstellsystem 405 verbunden, über das die Winkelverstellung der Rotorblätter 406 zur Einstellung einer geforderten elektrischen Leistung.

In den Schaltschränken 401 und 401' sind die beiden Betriebsführungsrechner MC und MC' über ein Bussystem jeweils mit den Eingangs-Funktionsmodulen 410 und 410', den beiden Versorgungen V und V' und den Ausgängen A₁, A_{1'}, A₂ und A_{2'}verbunden.

Durch das beschriebene Ausführungsbeispiel für eine redundante Steuerungseinrichtung wird ermöglicht, dass bei Ausfall einer Komponente oder eines Funktionsmoduls die entsprechende Ersatzkomponente oder das entsprechende Parallelmodul aktiviert werden kann.

Fällt zum Beispiel eine Komponente des Sensorik-Funktionsmoduls 402 oder sogar das komplette Modul aus, so kann der Betriebesführungsrechner MC durch Umschalten der Busleitung auf das Sensorik-Parallelmodul 402' zugreifen. Tritt zusätzlich noch der Defekt auf, dass die Zuleitung zwischen dem MC und dem Ausgang A₁ ausfällt, dann kann der Betriebsführungsrechner MC durch Umschalten der Busleitung über den Ausgang A_{1'} auf die Umrichtersteuerung zugreifen. Ähnliches gilt, wenn z. B. die Versorgung V des Betriebsführungsrechners MC ausfällt. In diesem Fall bestünde dann zum einen die Möglichkeit, dass die Versorgung V' die Versorgung des Betriebsführungsrechners MC übernimmt oder aber, dass der Betriebsführungsrechner MC' aktiviert wird.

Das redundante Steuerungssystem des vorliegenden Ausfiihrungsbeispiels ist somit so ausgestaltet, dass bei einem Ausfall oder Defekt einer Komponente oder eines Funktionsmoduls immer die Möglichkeit besteht, auf einen Ersatzbetrieb umzuschalten, um somit den Betrieb der Windenergieanlage, evtl. auch eingeschränkt aufrecht zu erhalten.
1. Windenergieanlage mit einem Rotor (100) mit mindestens einem Rotorblatt (101), der direkt oder indirekt mit einem Generator (110), zur elektrischen Leistungserzeugung gekoppelt ist, und einem elektrischen System (200), bestehend aus unterschiedlichen elektrischen Systemeinheiten (210, 220, 230, 400), die elektronische, elektrische und/ oder elektromechanische, und/ oder sensorische Komponenten und/ oder elektrotechnische Schutzeinrichtungen aufweisen, dadurch gekennzeichnet, dass alle Komponenten einer elektrischen Systemeinheit Systemeinheiten (210, 220, 230, 400) oder bestimmte Komponenten der elektrischen Systemeinheit (210, 220, 230, 400) entsprechend ihrer Aufgaben in ein oder mehrere Funktionsmodule (250, 250', 410) zusammengefasst sind, die mindestens eine Funktion in Verbindung mit der elektrischen Leistungserzeugung ausführen, wobei zu mindestens einem Funktionsmodul (250, 250', 410) mindestens ein Parallelmodul (270, 410') vorgesehen ist, das bei Normalbetrieb der Anlage eine gleiche oder ähnliche Funktion des Funktionsmodul (250, 250', 410) ausführt oder ausführen kann, und wobei Funktionsmodul (250, 250', 410) und Parallelmodul (270, 410') dergestalt miteinander verbunden oder verbindbar sind, dass bei einer Betriebsstörung, bei der ein Funktionsmodul (250, 250', 410) oder ein Parallelmodul (270, 410') ausfällt, das verbleibende funktionsfähige Funktions- oder Parallelmodul (250, 250', 270, 410, 410') zumindest teilweise die elektrische Leistungserzeugung aufrecht erhält.
2. Windenergieanlage nach Anspruch 1, dadurch gekennzeichnet, dass das Parallelmodul so ausgebildet ist, dass es bei Ausfall des Funktionsmoduls (250, 250', 410) dessen Funktion vollständig übernimmt.
3. Windenergieanlage nach Anspruch 1, dadurch gekennzeichnet, dass sie mindestens zwei Funktionsmodule (250, 250', 410), die gleiche oder ähnliche Funktionen ausführen, sowie mindestens ein Parallelmodul (270, 410') aufweist, das bei Ausfall eines Funktionsmoduls (250, 250') dessen Funktion vorzugsweise vollständig übernimmt.
4. Windenergieanlage nach einem der vorherigen Ansprüche, dadurch gekennzeichnet, dass eine elektrische Systemeinheit mindestens eine Steuerungseinrichtung zur Optimierung der elektrischen Stromerzeugung umfasst, wobei die Steuerungseinrichtung (400) mindestens einen Betriebsführungsrechner (MC, MC') aufweist.
5. Windenergieanlage nach dem vorherigen Anspruch, dadurch gekennzeichnet, dass die Steuerungseinrichtung (400) durch mindestens ein Versorgungsmodul (V, V') mit elektrischer Energie versorgt wird.
6. Windenergieanlage nach dem der vorherigen Anspruch, dadurch gekennzeichnet, dass mindestens ein Versorgungsmodul (V, V') so ausgebildet ist, dass es unabhängig vom öffentlichen elektrischen Netz ist.
7. Windenergieanlage nach einem der vorherigen Ansprüche, dadurch gekennzeichnet, dass das elektrische System mindestens eine weitere Steuerungseinrichtung aufweist, wobei die erste Steuerungseinrichtung als Funktionsmodul und die zweite Steuerungseinrichtung als Parallelmodul ausgebildet ist.
8. Windenergieanlage nach Anspruch 1, dadurch gekennzeichnet, dass zu mindestens einer der elektronischen, elektrischen und/ oder elektromechanischen Komponenten mindestens eine Ersatzkomponente vorgesehen ist, wobei Komponenten und Ersatzkomponenten dergestalt miteinander verbunden sind, dass bei Ausfall einer Komponente die Ersatzkomponente deren Aufgabe übernimmt.
9. Windenergieanlage nach einem der vorherigen Ansprüche, dadurch gekennzeichnet, dass die Windenergieanlage über ein Fernüberwachungssystem fernwartbar ist.
10. Windenergieanlage nach vorstehendem Anspruch, dadurch gekennzeichnet, dass das Fernüberwachungssystem so ausgebildet ist, dass es auf die Steuerungseinrichtung (210) zugreifen kann.
11. Windenergieanlage nach vorstehendem Anspruch, dadurch gekennzeichnet, dass das Fernüberwachungssystem so ausgebildet ist, dass der Ausfall eines Funktionsmoudul (250, 250') über das Fernüberwachungssystem diagnostizierbar ist.
12. Windenergieanlage nach vorstehendem Anspruch, dadurch gekennzeichnet, dass das Fernüberwachungssystem so ausgebildet ist, dass die Fehlerbehebung über das Fernüberwachungssystem durchführbar ist.
13. Windenergieanlage nach einem der vorherigen Ansprüche, dadurch gekennzeichnet, dass Umgebungs- und Anlagenparameter der Steuerungseinrichtung (210) zugeführt werden und die Steuerungseinrichtung (210) mittels Umgebungs- und Anlagenparameter eine Betriebsführung der Anlage durchführt, wobei zulässige Bereichsgrenzen der Umgebungsparameter und Anlagenparameter über Auslegungsparameter definiert werden.
14. Windenergieanlage nach Anspruch 13, dadurch gekennzeichnet, dass die Auslegungsparameter im Normalbetrieb im Betriebsführungsrechner hinterlegte Standard-Auslegungsparameter sind.
15. Windenergieanlage nach Anspruch 13, dadurch gekennzeichnet, dass der Betriebsführungsrechner bei einer Betriebsstörung auf Temporär-Auslegungsparameter zugreift, die im Betriebsführungsrechner hinterlegt und/ oder erzeugt und/ oder dem Betriebsführungsrechner zugeführt werden, über die an die Betriebsführung angepasste Temporär-Bereichsgrenzen für zulässige Umgebungsparameter und Anlagenparameter definiert werden, die eine Aufrechterhaltung der elektrischen Leistungserzeugung zumindest zeitweise ermöglichen.
16. Windenergieanlage nach einem der vorstehenden Ansprüche, dadurch gekennzeichnet, dass die temporären Bereichsgrenzen über das Fernüberwachungssystem direkt in den Betriebsführungsrechner eingebbar sind.
17. Windenergieanlage nach Anspruch 15 oder 16, dadurch gekennzeichnet, dass der Betriebsführungsrechner auf die Temporär-Auslegungsparameter bis zur Wiederherstellung des Normalbetriebs der Anlage zugreift.
18. Windenergieanlage nach einem der vorherigen Ansprüche, dadurch gekennzeichnet, dass mindestens zwei Komponenten / Funktions- und/ oder Parallelmodule (250, 250', 270)/ Systemeinheiten (210, 220, 230) mittels trennbarer Verbindungen miteinander verbunden sind.
19. Windenergieanlage nach einem der vorherigen Ansprüche, dadurch gekennzeichnet, dass mindestens zwei Komponenten / Funktions- und/ oder Parallelmodule (250, 250', 270)/ Systemeinheiten (210, 220, 230) mittels mindestens einem Bussystem miteinander verbunden sind, wobei das Bussystem mindestens umfasst Busteilnehmer, mindestens ein Übertragungsmedium sowie Software.
20. Windenergieanlage nach vorstehenden Anspruch dadurch gekennzeichnet, dass das Bussystem ringförmig oder als Netzstruktur ausgeführt ist.
21. Windenergieanlage nach Anspruch 19 oder 20, dadurch gekennzeichnet, dass mindestens ein Busteilnehmer einen Mikroprozessor aufweist, der so programmierbar ist, das er unter anderem die Funktionsfähigkeit mindestens einer Komponente, eines Funktions- oder Parallelmoduls (250, 250', 270) oder einer Systemeinheit (210, 220, 230) überwachen kann und bei Ausfall einer Komponente, eines Funktions- oder Parallelmoduls (250, 250', 270) oder einer Systemeinheit (210, 220, 230) auf eine Ersatzkomponente oder auf ein funktionsfähiges Funktions- oder Parallelmodul (250, 250', 270) oder eine funktionsfähige Systemeinheit (210, 220, 230) umschalten kann.
22. Windenergieanlage nach Anspruch 1, dadurch gekennzeichnet, dass das mindestens eine Rotorblatt (101) winkelverstellbar ausgebildet ist.
23. Windenergieanlage nach Anspruch 22, dadurch gekennzeichnet, dass die elektrischen Systemeinheiten (210, 220, 230) weiterhin umfassen ein Blattverstellsystem (220) zur Regelung der Winkelstellung des mindestens einen Rotorblatts (101).
24. Windenergieanlage nach einem der vorhergehenden Ansprüche, dadurch gekennzeichnet, dass die Einrichtung zur Kopplung des Generators (230) an das elektrische Netz (125) so ausgebildet ist, dass der Generator mit mindestens zwei verschiedenen Drehzahlen, vorzugsweise mit einem variablen Drehzahlbereich, am elektrischen Netz (125) betreibbar ist.
25. Windenergieanlage nach Anspruch 1, dadurch gekennzeichnet, dass die Einrichtung zur Kopplung des Generators an das elektrische Netz ein Umrichtersystem (230) ist, das mehrere aktive Schalter aufweist.
26. Windenergieanlage nach vorstehendem Anspruch, dadurch gekennzeichnet, dass das Umrichtersystem (230) mindestens eine Umrichtersteuerung aufweist, über die die akiven Schalter betätigbar sind.
27. Windenergieanlage nach vorstehendem Anspruch, dadurch gekennzeichnet, dass die Umrichtersteuerung mit der Steuerungseinrichtung gekoppelt ist.
28. Windenergieanlage nach vorstehendem Anspruch, dadurch gekennzeichnet, dass mindestens ein Funktionsmodul (250, 250') so ausgebildet ist, dass es mindestens die aktiven Schalter des Umrichtersystems (230) zumindest teilweise umfasst.
29. Windenergieanlage nach einem der vorhergehenden Ansprüche, dadurch gekennzeichnet, dass über den Generator (110) ein Wechselstrom erzeugbar ist, das Umrichtersystem (230) mindestens einen maschinenseitigen Wechselrichter (254) aufweist, der mit dem Generator (110) gekoppelt ist und den Wechselstrom zumindest teilweise in einen Gleichstrom oder eine Gleichspannung umwandelt, das Umrichtersystem weiterhin einen Gleichstromzwischenkreis oder einen Gleichspannungszwischenkreis (259) aufweist, der den maschinenseitigen Wechselrichter (254) mit mindestens einem netzseitigen Wechselrichter (255), der mit dem elektrischen Netz (125) gekoppelt ist, verbindet, wobei der netzseitige Wechselrichter (255) den Gleichstrom oder die Gleichspannung in eine, an das elektrische Netz (125) angepassten elektrische Leistung umwandelt.
30. Windenergieanlage nach vorstehendem Anspruch, dadurch gekennzeichnet, dass der maschinenseitige Wechselrichter (254) aktive Schalter aufweist.
31. Windenergieanlage nach einem der vorhergehenden Ansprüche, dadurch gekennzeichnet, dass ein Funktionsmodul (250, 250') mindestens umfasst den maschinenseitigenseitigen Wechselrichter (254) , den Gleichstromzwischenkreis bzw. den Gleichspannungszwischenkreis (259), sowie den netzseitigen Wechselrichter (255).
32. Windenergieanlage nach Anspruch 28 oder 31, dadurch gekennzeichnet, dass zu dem Funktionsmodul (250, 250') mindestens ein Parallelmodul (270) vorgesehen ist, wobei Funktions- und Parallelmodul über trennbare Verbindungen (261, 262, 216', 262', 271, 272) direkt oder indirekt mit dem Generator (110) und/oder direkt oder indirekt mit dem elektrischen Netz (125) verbunden sind.
33. Windenergieanlage nach vorstehendem Anspruch, dadurch gekennzeichnet, dass bei Ausfall eines Funktions- oder Parallelmoduls (250, 250', 270) durch Öffnen der trennbaren Verbindungen (261, 262, 216', 262', 271, 272) das ausgefallene Modul im elektrischen System isoliert wird.
34. Windenergieanlage nach Anspruch 32 oder 33, dadurch gekennzeichnet, dass die trennbaren Verbindungen (261, 262, 216', 262', 271, 272) mindestens ein Schaltelement enthalten.
35. Windenergieanlage nach vorstehendem Anspruch, dadurch gekennzeichnet, dass das Schaltelement manuell schaltbar ist.
36. Windenergieanlage nach einem der vorhergehenden Ansprüche, dadurch gekennzeichnet, dass das Schaltelement ferngesteuert schaltbar ist.
37. Windenergieanlage nach einem der vorhergehenden Ansprüche, dadurch gekennzeichnet, dass das Schaltelement automatisch über die Steuerungseinrichtung (210) bzw. das Fernüberwachungssystem schaltbar ist.
38. Windenergieanlage nach einem der vorhergehenden Ansprüche, dadurch gekennzeichnet, dass mindestens eine trennbare Verbindung (261, 262, 216', 262', 271, 272) zwei in Reihe geschaltete Schaltelemente aufweist, von denen eines ein Leistungsschalter und das andere ein Schütz ist.

## Patentansprüche

1. Windenergieanlage mit einem Rotor (100) mit mindestens einem Rotorblatt (101), der direkt oder indirekt mit einem Generator (110), zur elektrischen Leistungserzeugung gekoppelt ist, und einem elektrischen System (200), bestehend aus unterschiedlichen elektrischen Systemeinheiten (210, 220, 230, 400), die elektronische, elektrische und/ oder elektromechanische, und/ oder sensorische Komponenten und/ oder elektrotechnische Schutzeinrichtungen aufweisen, **dadurch gekennzeichnet, dass** alle Komponenten einer elektrischen Systemeinheit (210, 220, 230, 400) oder bestimmte Komponenten der elektrischen Systemeinheit (210, 220, 230, 400) entsprechend ihrer Aufgaben in ein oder mehrere Funktionsmodule (250, 250', 410) zusammengefasst sind, die mindestens eine Funktion in Verbindung mit der elektrischen Leistungserzeugung ausführen, wobei zu mindestens einem Funktionsmodul (250, 250', 410) mindestens ein Parallelmodul (270, 410') vorgesehen ist, das bei Normalbetrieb der Anlage eine gleiche oder ähnliche Funktion des Funktionsmodul (250, 250', 410) ausführt oder ausführen kann, und wobei Funktionsmodul (250, 250', 410) und Parallelmodul (270, 410') dergestalt miteinander verbunden oder verbindbar sind, dass bei einer Betriebsstörung, bei der ein Funktionsmodul (250, 250', 410) oder ein Parallelmodul (270, 410') ausfällt, das verbleibende funktionsfähige Funktions- oder Parallelmodul (250, 250', 270, 410, 410') zumindest teilweise die elektrische Leistungserzeugung aufrecht erhält, wobei eine Einrichtung zur Kopplung des Generators an das elektrische Netz vorgesehen ist, die ein Umrichtersystem (230) ist, das mehrere aktive Schalter aufweist und mindestens ein Funktionsmodul (250, 250') so ausgebildet ist, dass es mindestens die aktiven Schalter des Umrichtersystems (230) zumindest teilweise umfasst

2. Windenergieanlage nach Anspruch 1, **dadurch gekennzeichnet, dass** das Parallelmodul so ausgebildet ist, dass es bei Ausfall des Funktionsmoduls (250, 250', 410) dessen Funktion vollständig übernimmt.

3. Windenergieanlage nach Anspruch 1, **dadurch gekennzeichnet, dass** sie mindestens zwei Funktionsmodule (250, 250', 410), die gleiche oder ähnliche Funktionen ausführen, sowie mindestens ein Parallelmodul (270, 410') aufweist, das bei Ausfall eines Funktionsmoduls (250, 250') dessen Funktion vorzugsweise vollständig übernimmt.

4. Windenergieanlage nach einem der vorherigen Ansprüche, **dadurch gekennzeichnet, dass** eine elektrische Systemeinheit mindestens eine Steuerungseinrichtung zur Optimierung der elektrischen Stromerzeugung umfasst, wobei die Steuerungseinrichtung (400) mindestens einen Betriebsführungsrechner (MC, MC') wobei die Steuerungseinrichtung (400) durch mindestens ein Versorgungsmodul (V, V') mit elektrischer Energie versorgt wird.und dass mindestens ein Versorgungsmodul (V, V') so ausgebildet ist, dass es unabhängig vom öffentlichen elektrischen Netz ist.

5. Windenergieanlage nach einem der vorherigen Ansprüche, **dadurch gekennzeichnet, dass** das elektrische System mindestens eine weitere Steuerungseinrichtung aufweist, wobei die erste Steuerungseinrichtung als Funktionsmodul und die zweite Steuerungseinrichtung als Parallelmodul ausgebildet ist.

6. Windenergieanlage nach Anspruch 1, **dadurch gekennzeichnet, dass** zu mindestens einer der elektronischen, elektrischen und/ oder elektromechanischen Komponenten mindestens eine Ersatzkomponente vorgesehen ist, wobei Komponenten und Ersatzkomponenten dergestalt miteinander verbunden sind, dass bei Ausfall einer Komponente die Ersatzkomponente deren Aufgabe übernimmt.

7. Windenergieanlage nach einem der vorherigen Ansprüche, **dadurch gekennzeichnet, dass** die Windenergieanlage über ein Femüberwachungssystem fernwartbar ist und das Fernüberwachungssystem so ausgebildet ist, dass es auf die Steuerungseinrichtung (210) zugreifen kann und der Ausfall eines Funktionsmoudul (250, 250') über das Fernüberwachungssystem diagnostizierbar ist wobei die Fehlerbehebung über das Fernüberwachungssystem durchführbar ist.

8. Windenergieanlage nach einem der vorherigen Ansprüche, **dadurch gekennzeichnet, dass** Umgebungs- und Anlagenparameter der Steuerungseinrichtung (210) zugeführt werden und die Steuerungseinrichtung (210) mittels Umgebungs- und Anlagenparameter eine Betriebsführung der Anlage durchführt, wobei zulässige Bereichsgrenzen der Umgebungsparameter und Anlagenparameter über Auslegungsparameter definiert werden wobei die Auslegungsparameter im Normalbetrieb im Betriebsführungsrechner hinterlegte Standard-Auslegungsparameter sind wobei dass der Betriebsführungsrechner bei einer Betriebsstörung auf Temporär-Auslegungsparameter zugreift, die im Betriebsführungsrechner hinterlegt und/ oder erzeugt und/ oder dem Betriebsführungsrechner zugeführt werden, über die an die Betriebsführung angepasste Temporär-Bereichsgrenzen für zulässige Umgebungsparameter und Anlagenparameter definiert werden, die eine Aufrechterhaltung der elektrischen Leistungserzeugung zumindest zeitweise ermöglichen wobei die temporären Bereichsgrenzen über das Fernüberwachungssystem direkt in den Betriebsführungsrechner eingebbar sind, und der Betriebsführungsrechner auf die Temporär-Auslegungsparameter bis zur Wiederherstellung des Normalbetriebs der Anlage zugreift.

9. Windenergieanlage nach einem der vorherigen Ansprüche, **dadurch gekennzeichnet, dass** mindestens zwei Komponenten / Funktions- und/ oder Parallelmodule (250, 250', 270)/ Systemeinheiten (210, 220, 230) mittels trennbarer Verbindungen sowie mittels mindestens einem Bussystem miteinander verbunden sind, wobei das Bussystem mindestens umfasst Busteilnehmer, mindestens ein Übertragungsmedium sowie Software., wobeidas Bussystem ringförmig oder als Netzstruktur ausgeführt ist, wobei mindestens ein Busteilnehmer einen Mikroprozessor aufweist, der so programmierbar ist, das er unter anderem die Funktionsfähigkeit mindestens einer Komponente, eines Funktions- oder Parallelmoduls (250, 250', 270) oder einer Systemeinheit (210, 220, 230) überwachen kann und bei Ausfall einer Komponente, eines Funktions- oder Parallelmoduls (250, 250', 270) oder einer Systemeinheit (210, 220, 230) auf eine Ersatzkomponente oder auf ein funktionsfähiges Funktions- oder Parallelmodul (250, 250', 270) oder eine funktionsfähige Systemeinheit (210, 220, 230) umschalten kann.

10. Windenergieanlage nach Anspruch 1, **dadurch gekennzeichnet, dass** das mindestens eine Rotorblatt (101) winkelverstellbar ausgebildet ist und dass die elektrischen Systemeinheiten (210, 220, 230) weiterhin umfassen ein Blattverstellsystem (220) zur Regelung der Winkelstellung des mindestens einen Rotorblatts (101).und dass die Einrichtung zur Kopplung des Generators (230) an das elektrische Netz (125) so ausgebildet ist, dass der Generator mit mindestens zwei verschiedenen Drehzahlen, vorzugsweise mit einem variablen Drehzahlbereich, am elektrischen Netz (125) betreibbar ist und dass das Umrichtersystem (230) mindestens eine Umrichtersteuerung aufweist, über die die aktiven Schalter betätigbar sind wobei die Umrichtersteuerung mit der Steuerungseinrichtung gekoppelt ist.

11. Windenergieanlage nach einem der vorhergehenden Ansprüche, **dadurch gekennzeichnet, dass** über den Generator (110) ein Wechselstrom erzeugbar ist, das Umrichtersystem (230) mindestens einen maschinenseitigen Wechselrichter (254) aufweist, der mit dem Generator (110) gekoppelt ist und den Wechselstrom zumindest teilweise in einen Gleichstrom oder eine Gleichspannung umwandelt, das Umrichtersystem weiterhin einen Gleichstromzwischenkreis oder einen Gleichspannungszwischenkreis (259) aufweist, der den maschinenseitigen Wechselrichter (254) mit mindestens einem netzseitigen Wechselrichter (255), der mit dem elektrischen Netz (125) gekoppelt ist, verbindet, wobei der netzseitige Wechselrichter (255) den Gleichstrom oder die Gleichspannung in eine, an das elektrische Netz (125) angepassten elektrische Leistung umwandelt.

12. Windenergieanlage nach vorstehendem Anspruch, **dadurch gekennzeichnet, dass** der maschinenseitige Wechselrichter (254) aktive Schalter aufweist.

13. Windenergieanlage nach einem der vorhergehenden Ansprüche, **dadurch gekennzeichnet, dass** ein Funktionsmodul (250, 250') mindestens umfasst den maschinenseitigenseitigen Wechselrichter (254), den Gleichstromzwischenkreis bzw. den Gleichspannungszwischenkreis (259), sowie den netzseitigen Wechselrichter (255).

14. Windenergieanlage nach einem der vorhergehenden Ansprüche, **dadurch gekennzeichnet, dass** zu dem Funktionsmodul (250, 250') mindestens ein Parallelmodul (270) vorgesehen ist, wobei Funktions- und Parallelmodul über trennbare Verbindungen (261, 262, 216', 262', 271, 272) direkt oder indirekt mit dem Generator (110) und/oder direkt oder indirekt mit dem elektrischen Netz (125) (125) verbunden sind, wobei bei Ausfall eines Funktions- oder Parallelmoduls (250, 250', 270) durch Öffnen der trennbaren Verbindungen (261, 262, 216', 262', 271, 272) das ausgefallene Modul im elektrischen System isoliert wird wobei die trennbaren Verbindungen (261, 262, 216', 262', 271, 272) mindestens ein Schaltelement enthalten welches manuell und oder ferngesteuert schaltbar ist, wobei insbesondere das Schaltelement automatisch über die Steuerungseinrichtung (210) bzw. das Fernüberwachungssystem schaltbar ist, wobei insbesondere mindestens eine trennbare Verbindung (261, 262, 216', 262', 271, 272) zwei in Reihe geschaltete Schaltelemente aufweist, von denen eines ein Leistungsschalter und das andere ein Schütz ist.

15. Windenergieanlage mit einem Rotor (100) mit mindestens einem Rotorblatt (101), der direkt oder indirekt mit einem Generator (110), zur elektrischen Leistungserzeugung gekoppelt ist, und einem elektrischen System (200), bestehend aus unterschiedlichen elektrischen Systemeinheiten (210, 220, 230, 400), die elektronische, elektrische und/ oder elektromechanische, und/ oder sensorische Komponenten und/ oder elektrotechnische Schutzeinrichtungen aufweisen, wobei die elektrischen Systemeinheiten (210, 220, 230, 400) mindestens umfassen eine Einrichtung zur Kopplung des Generators (230) an ein elektrisches Stromnetz (125), sowie eine Steuerungseinrichtung (210, 400) mit einem Betriebsführungsrechner, die unter anderem die elektrische Leistungserzeugung optimiert und alle Komponenten einer elektrischen Systemeinheit Systemeinheiten (210, 220, 230, 400) oder bestimmte Komponenten der elektrischen Systemeinheit (210, 220, 230, 400) entsprechend ihrer Aufgaben in ein oder mehrere Funktionsmodule (250, 250', 410) zusammengefasst sind, die mindestens eine Funktion in Verbindung mit der elektrischen Leistungserzeugung ausführen, wobei zu mindestens einem Funktionsmodul (250, 250', 410) mindestens ein Parallelmodul (270, 410') vorgesehen ist, das bei Normalbetrieb der Anlage eine gleiche oder ähnliche Funktion des Funktionsmodul (250, 250', 410) ausführt oder ausführen kann, und wobei Funktionsmodul (250, 250', 410) und Parallelmodul (270, 410') dergestalt miteinander verbunden oder verbindbar sind, dass bei einer Betriebsstörung, bei der ein Funktionsmodul (250, 250', 410) oder ein Parallelmodul (270, 410') ausfällt, das verbleibende funktionsfähige Funktions- oder Parallelmodul (250, 250', 270, 410, 410') zumindest teilweise die elektrische Leistungserzeugung aufrecht erhält und Umgebungs- und Anlagenparameter der Steuerungseinrichtung (210) zugeführt werden und die Steuerungseinrichtung (210) mittels Umgebungs- und Anlagenparameter eine Betriebsführung der Anlage durchführt, wobei zulässige Bereichsgrenzen der Umgebungsparameter und Anlagenparameter über Auslegungsparameter definiert werden. Windenergieanlage nach einem der vorhergehenden Ansprüche, wobei mindestens eine trennbare Verbindung (261, 262, 216', 262', 271, 272) vorgesehen ist, die zwei in Reihe geschaltete Schaltelemente aufweist, von denen eines ein Leistungsschalter und das andere ein Schütz ist.
